(19) Europäisches Patentamt
European Patent Office
Office européen des brevets

(11) **EP 3 902 131 A1**

(12) **EUROPEAN PATENT APPLICATION**
published in accordance with Art. 153(4) EPC

(43) Date of publication:
**27.10.2021 Bulletin 2021/43**

(51) Int Cl.:
**H02M 3/158** *(2006.01)*    **H02M 3/335** *(2006.01)*

(21) Application number: **19900074.6**

(22) Date of filing: **19.11.2019**

(86) International application number:
**PCT/ES2019/070790**

(87) International publication number:
**WO 2020/128122 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.12.2018 ES 201831230**

(71) Applicant: **Power Electronics España, S.L.**
**46160 Lliria (Valencia) (ES)**

(72) Inventors:
• **SALVO LILLO, Abelardo**
**46160 Lliria (Valencia) (ES)**
• **SALVO LILLO, David**
**46160 Lliria (Valencia) (ES)**
• **POVEDA LERMA, Antonio**
**46160 Lliria (Valencia) (ES)**
• **CAMPS SORIANO, José Luis**
**46160 Lliria (Valencia) (ES)**
• **MOLLÁ CALABUIG, Sergio**
**46160 Lliria (Valencia) (ES)**

(74) Representative: **Ungria López, Javier**
**Avda. Ramón y Cajal, 78**
**28043 Madrid (ES)**

(54) **L-SHAPED DC/DC CONVERTER**

(57)    The present invention relates to an L-shaped DC/DC converter circuit with multiple configurations for obtaining a boost converter or a buck converter, allowing the voltage and capacity of capacitors, the values of average voltage supported by diodes and transistors, and the levels and ripple of the current circulating through same, to be reduced. The converter, in its most basic configuration, comprises a coil (L1); a first capacitor (C1) in series with a third capacitor (C3), wherein the first ca-pacitor is connected to a first voltage (V1), and wherein the first capacitor in series with the third capacitor are connected to a second voltage (V2); a first transistor (Q1) connected in series to a third transistor (Q3), both being connected to the second voltage (V2). The interconnec-tion (A') between the first transistor and the third transistor is connected to the interconnection (A) between the first capacitor and the third capacitor, with the coil interposed.

FIG. 1

**Description**

FIELD OF THE INVENTION

The present invention is related to new topologies of an L-shaped DC/DC converter circuit.

The technical field of the invention falls within the field of voltage conversion and especially within the conversion of high voltages with high currents as occurs in power converters, motor controllers and solar and wind power generation systems.

BACKGROUND OF THE INVENTION

In the state of the art, boost converters are known, which are a type of DC/DC converter wherein a DC voltage is obtained at the output of the converter that is greater than the DC voltage at its input. Likewise, buck converters are known, which are a type of DC/DC converter wherein a DC voltage is obtained at the output of the converter that is lower than the DC voltage at its input. The DC/DC converter is a type of switching power supply that contains switching elements (diodes and/or transistors) and elements for storing energy (capacitors and/or coils). In high voltage and/or high current applications such as power converters, the capacitors represent the limitation of the converter circuit since they are the components that must withstand the highest voltage and must therefore be sized for this purpose.

Taking into account the aforementioned problems of the state of the art, it would therefore be desirable to find a DC/DC converter that overcomes the mentioned drawbacks.

DESCRIPTION OF THE INVENTION

In one aspect of the invention, an L-shaped DC/DC converter is proposed the particular feature of which is that the output capacitor is not exclusively subjected to the output voltage but to the output voltage minus the input voltage, which in the case of boost-type converters, the input voltage is lower than the output voltage.

Another additional advantage is that unlike the converters of the state of the art wherein there is only one capacitor subjected to the output voltage, in the present invention there are at least two capacitors, one capacitor subjected to the input voltage and another capacitor subjected to the output voltage minus the input voltage.

In one embodiment of the invention, an L-shaped (single) DC/DC Converter is described, comprising: a first coil (L1); a first capacitor (C1) in series with a third capacitor (C3), wherein the first capacitor (C1) is configured to be connected to a first voltage (V1) and wherein the first capacitor (C1) in series with the third capacitor (C3) are configured to be connected to a second voltage (V2); and, a first transistor (Q1) connected in series with a third transistor (Q3) and configured to be connected to the second voltage (V2). Wherein an interconnection point (A') between the first transistor (Q1) and the third transistor (Q3) is connected with an interconnection point (A) between the first capacitor (C1) and the third capacitor (C3) with the first coil (L1) therebetween. Optionally, the L-shaped DC/DC converter can operate in Boost type, for which the third transistor (Q3) operates as a diode (D3), the first voltage (V1) is an input voltage and the second voltage (V2) is an output voltage, wherein the second voltage (V2) is greater than the first voltage (V1).

In another embodiment of the invention, a Bidirectional Dual L-shaped DC/DC Converter is described which additionally comprises: a second capacitor (C2), a fourth capacitor (C4), a second transistor (Q2), a fourth transistor (Q4) and a second coil (L2); such that: the third capacitor (C3), the first capacitor (C1), the second capacitor (C2) and the fourth capacitor (C4) are connected in series (C3-C1-C2-C4) and are configured to be connected to the second voltage (V2) and the first capacitor (C1) in series with the second capacitor (C2) (C1-C2) are configured to be connected to the first voltage (V1); and, the first transistor (Q1) and the second transistor (Q2) are connected in series and connect with the first voltage by means of the first coil (L1) and the second coil (L2), respectively, and with the second voltage (V2) by means of the third transistor (Q3) and the fourth transistor (Q4), respectively, the interconnection point (A') between the first transistor (Q1) and the second transistor (Q2) being connected to the interconnection point (A) between the first capacitor (C1) and the second capacitor (C2). For the Bidirectional Dual L-shaped DC/DC Converter to operate as Boost type, the third transistor (Q3) and the fourth transistor (Q4) operate as diodes (D3, D4) in reverse polarisation, the first voltage (V1) is an input voltage and the second voltage (V2) is an output voltage, wherein the second voltage (V2) is greater than the first voltage (V1). For the Bidirectional Dual L-shaped DC/DC Converter to operate as Buck type, the first transistor (Q1) and the second transistor (Q2) operate as diodes (D1, D2) in reverse polarisation, the first voltage (V1) is an output voltage and the second voltage (V2) is an input voltage, wherein the second voltage (V2) is greater than the first voltage (V1).

In another embodiment of the invention, an Interleaved Bidirectional Dual L-shaped DC/DC Converter is described that additionally comprises "n" levels wherein each level "i" is comprised between 1 and n, and wherein each level "i" comprises: an i-third transistor (Qi.3), an i-first transistor (Qi.1), an i-second transistor (Qi.2) and an i-fourth transistor (Qi.4) connected in series, and an i-first coil (Li.1) and an i-second coil (Li.2); such that the i-first transistor (Qi.1) and the i-second transistor (Qi.2) are connected in series and connect with the first voltage (V1) by means of the i-first coil (Li.1) and the i-second coil (Li.2), respectively, and with the second voltage (V2) by means of the i-third transistor (Qi.3) and the i-fourth transistor (Qi.4), respectively, the interconnection point (B, C, D) between the i-first transistor (Qi.1) and the i-second transistor (Qi.2) being connected to the interconnection point (A) between the first capacitor (C1) and the second capacitor (C2). For the Interleaved Bidirectional Dual L-shaped DC/DC Converter to operate as Boost type, the third transistor (Q3), the fourth transistor (Q4), the i-third transistor (Qi.3), the i-fourth transistor (Qi.4) operate as diodes (D3, D4, Di.3, Di.4) in reverse polarisation, the first voltage (V1) is an input voltage and the second voltage (V2) is an output voltage, wherein the second voltage (V2) is greater than the first voltage (V1). For the Interleaved Bidirectional Dual L-shaped DC/DC Converter to operate as Buck type, the first transistor (Q1), the second transistor (Q2), the i-first transistor (Qi.1) and the i-second transistor (Qi.2) operate as diodes (D1, D2, Di.1, Di.2) in reverse polarisation, the first voltage (V1) is an output voltage and the second voltage (V2) is an input voltage, wherein the second voltage (V2) is greater than the first voltage (V1).

In another embodiment of the invention, a Total Interleaved Bidirectional Dual L-shaped DC/DC Converter is described that additionally comprises switches (P1, P2, P3, P4) to connect an input and an output of the circuit with the first voltage (V1) and with the second voltage (V2) indistinctly.

BRIEF DESCRIPTION OF THE FIGURES

Figure 1 shows an embodiment of the L-shaped DC/DC converter circuit according to the present invention.
Figure 2 shows the L-shaped DC/DC converter circuit of Figure 1 with the transistor in conducting status.
Figure 3 shows the L-shaped DC/DC converter circuit of Figure 1 with the transistor in cut-off status.
Figures 4A and 4B show a simulation of the L-shaped DC/DC converter circuit of Figure 1 wherein the currents in the circuit components are shown.
Figure 5 shows a simulation of the L-shaped DC/DC converter circuit in Figure 1 wherein the voltages in the circuit components are shown.
Figure 6 shows an embodiment of the dual or split L-shaped DC/DC converter circuit according to the present invention.
Figure 7A, 7B and 7C show a simulation of the Dual L-shaped DC/DC converter circuit of Figure 6 wherein the currents in the circuit components are shown.
Figure 8 shows a simulation of the dual L-shaped DC/DC converter circuit of Figure 6 wherein the voltages in the circuit components are shown.
Figure 9 shows an embodiment of the Bidirectional Dual L-shaped DC/DC converter circuit according to the present invention.
Figure 10 shows the Bidirectional Dual L-shaped DC/DC converter circuit of Figure 9 operating in buck mode.
Figures 11A and 11B show a simulation of the Bidirectional Dual L-shaped DC/DC converter circuit of Figure 9 wherein the currents in the circuit components are shown.
Figure 12 shows a simulation of the Bidirectional Dual L-shaped DC/DC converter circuit of Figure 9 wherein the voltages in the circuit components are shown.
Figure 13 shows an embodiment of the Interleaved Bidirectional Dual L-shaped DC/DC Converter circuit for n=3 levels according to the present invention.
Figures 14A to 14D and 16A to 16D show a simulation of the Interleaved Bidirectional Dual L-shaped DC/DC Converter circuit for n=3 levels of Figure 13 wherein the currents in the circuit components are shown.
Figure 15 shows a simulation of the Interleaved Bidirectional Dual L-shaped DC/DC Converter circuit for n=3 levels of Figure 13 wherein the voltages in the circuit components are shown.
Figure 17 shows an embodiment of the Total Bidirectional Dual L-shaped DC/DC converter circuit according to the present invention.

PREFERRED EMBODIMENT OF THE INVENTION

An exemplary embodiment of the invention is described below in an illustrative and non-limiting manner.

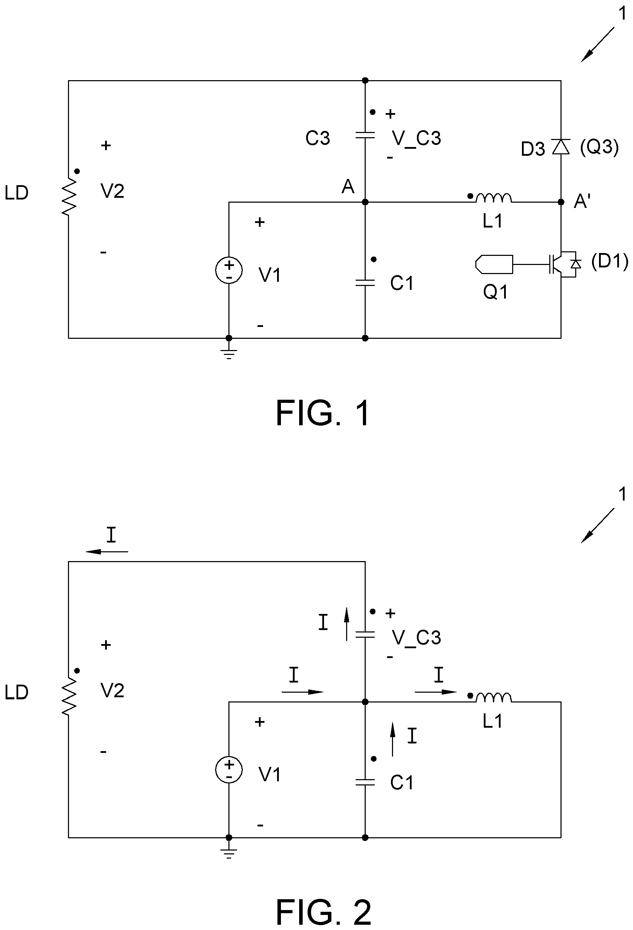

Figure 1 shows an embodiment of the L-shaped DC/DC converter circuit (1). The L-shaped DC/DC converter circuit is made up of the input capacitor C1, the output capacitor C3, the coil L1, the diode D3 and the transistor Q1 in the configuration shown in Figure 1. Alternatively, the diode D3 can be replaced by a transistor Q3 causing it to operate as a diode. The L-shaped DC/DC converter, according to the configuration shown in Figure 1, has its input connected to an input voltage V1 and an output connected to the load LD subjected to the output voltage V2. The L-shaped DC/DC converter comprises:

- the input capacitor C1 in parallel with the transistor Q1, and the coil L1 connected in series between the input capacitor C1 and the transistor Q1;
- the output capacitor C3, in parallel with the diode D3, and the input capacitor C1 in series.

The input capacitor C1 is subjected to the input voltage V1. The input capacitor C1 in series with the output capacitor C3 are subjected to the output voltage V2, and the diode D3 in series with the transistor Q1 is also subjected to the output voltage V2. Therefore, the output capacitor C3 is advantageously subjected to the output voltage V2 minus the input voltage V1.

The L-shaped DC/DC converter shown in Figure 1 operates as a Boost converter, with the advantage that the output capacitor C3 withstands a lower voltage than the total output voltage V2, as a consequence of having the constant supply of the voltage input V1. Applying Kirchhoff to the mesh formed by the voltage of the load LD, the output capacitor C3 and the input voltage V1, we will have:

$$V2 = V\_C3 + V1 \qquad\qquad Ec.\ 1$$

The relationship between the input voltage V1 and the output voltage V1 as a function of the "Dboost" duty cycle is:

$$V2/V1 = 1/(1 - Dboost) \qquad\qquad Ec.\ 2$$

Dboost being a value comprised between 0 and 1, both inclusive.

With the *Ec.* 1 and *Ec.* 2 equation the relationship between the input voltage V1 and the voltage at the output capacitor V_C3 is obtained according to the duty cycle:

$$V\_C3/V1 = Dboost/(1 - Dboost) \qquad\qquad Ec.\ 3$$

Following the same method, but looking for the relationship between the voltage of the output capacitor V_C3 and the output voltage V2, we obtain:

$$V2/V\_C3 = 1/Dboost \quad Ec.\ 4$$

The average value of the voltage withstood by the transistor Q1 is the input voltage V1, minus the possible losses due to conduction that may exist in the input circuit. Furthermore, the value of the average voltage withstood by the diode D3 is the voltage of the output capacitor, V_C3. The voltage peak withstood by both the transistor Q1 and the diode D3 is the value of the output voltage V2.

During the switching of the transistor Q1, there will be two statuses. In the first status, the transistor Q1 is in conduction, short circuiting the coil L1 with the input source, charging coil L1. Meanwhile the capacitor C3 is discharged on the load LD, i.e., the output of the L-shaped DC/DC converter circuit. In this first status, the circuit would be as shown in Figure 2.

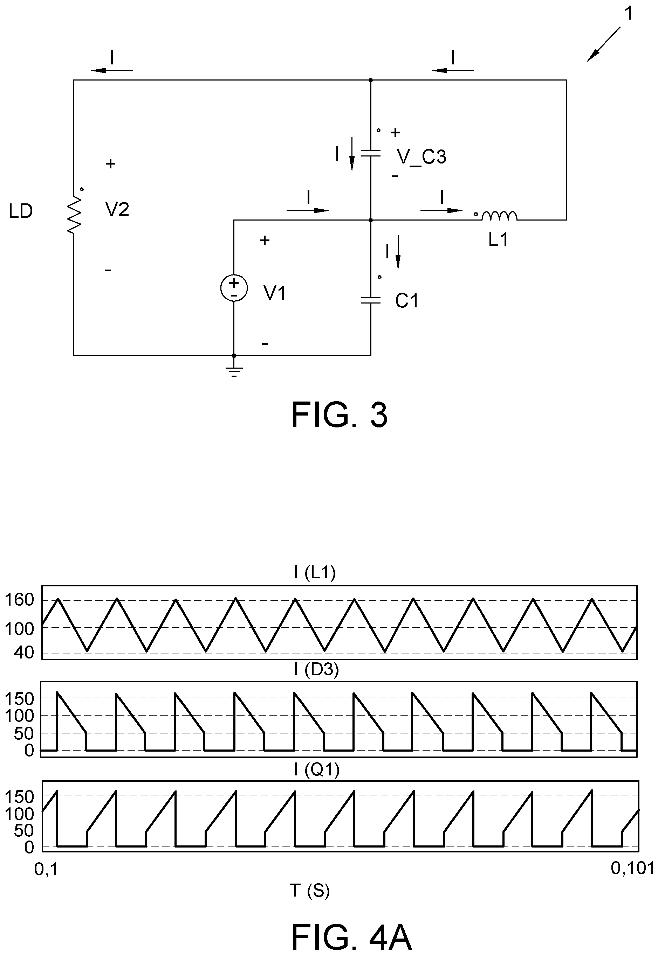

In the next status, the transistor Q1 is open, passing to conduct the diode D3. Therefore, the coil L1 discharges its charge on the capacitor C3 (charging the capacitor C3) and on the load LD, as shown in Figure 3.

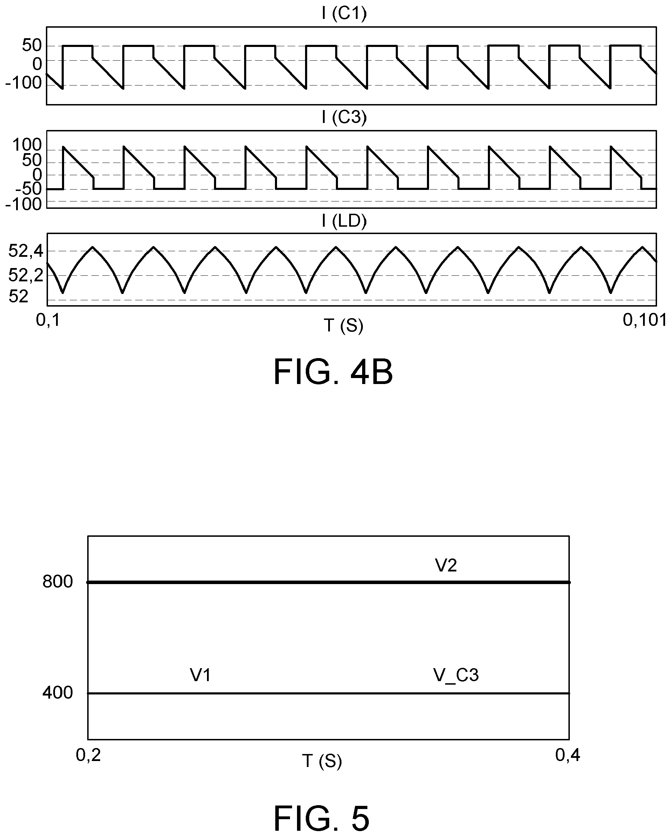

Figure 4A shows the currents in the coil L1, the diode D3, and the transistor Q1. Figure 4B shows the currents in the input capacitor C1, the output capacitor C3 and in the load LD. All currents shown in Figures 4A and 4B correspond to a value for the "Dboost" duty cycle of 0.5 (50%).

Figure 5 shows the input voltage V1, the output voltage V2 and the voltage at the output capacitor V_C3, with a value for the "Dboost" duty cycle of 0.5 (50%). Figure 5 shows that for an input voltage V1 of 400 volts, V2 is 800 volts and V_C3 is 400 volts. The same L-shaped converter with a value for the "Dboost" duty cycle of 0.25 (25%) and an input voltage Vin of 400V, would have a Vout of 533.3V and a V($C_{OUT}$) of 133.3V. The same L-shaped DC/DC converter with a "Dboost" duty cycle value of 0.75 (75%) and an input voltage V1 of 400V, would have V2 of 1600V and a V_C3 of 1200V.

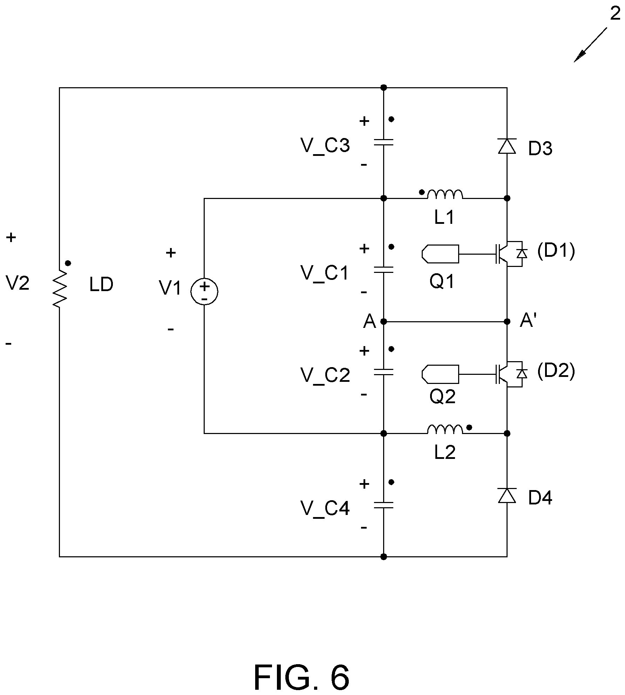

Figure 6 shows an embodiment of the dual or split L-shaped DC/DC converter circuit. The dual L-shaped DC/DC converter circuit is based on the L-shaped DC/DC converter circuit as the dual L-shaped DC/DC converter circuit comprises two mirror-connected L-shaped DC/DC converter circuits. In this way, both the input and the output capacitors are made to withstand even less voltage in the dual L-shaped topology (Fig. 6) with respect to the L-shaped topology (Fig. 1). In the dual L-shaped topology shown in Figure 6, the dual L-shaped DC/DC converter circuit is made up of four capacitors C1-C4, two coils L1-L2, two diodes D3-D4, and two transistors Q1-Q2 in the configuration shown in Figure 6. Like the circuit shown in Figure 1, in the dual L-shaped DC/DC converter circuit, the two diodes D3-D4 can be replaced by two transistors operating as diodes, so that in that case the topology would be bidirectional.

The dual L-shaped DC/DC converter (Fig. 6 - 2), according to the configuration shown in Figure 6, comprises: the capacitor C3, the capacitor C1, the capacitor C2 and the capacitor C4 connected in series, wherein the four capacitors (C3-C1-C2-C4) are configured to be connected to the output voltage V2 and the two central capacitors C1 and C2 are configured to be connected to the input voltage V1; the transistor Q1 connected in series with the transistor Q2 that connect with the input voltage V1 by means of two coils (L1-L2) and with the output potential V2 by means of two diodes (D3-D4) in reverse polarisation, the interconnection point (A') between the transistors (Q1-Q2) being connected to the interconnection point (A) between the two central capacitors (C1-C2).

Analysing the dual L-shaped circuit of Figure 6, it can be deduced that the voltage supported by the output capacitor V_C3 is reduced by half, being divided between the two output capacitors (C3-C4), thus the output voltage will be:

$$V2 = V\_C3 + V\_C4 + V1$$

Additionally, it can be seen that the input voltage V1 is no longer withstood by a single capacitor, but is divided between the input capacitors (C1-C2), each one of them supporting half the voltage, unlike the L-shaped converter, which had to withstand all the input voltage. Therefore:

$$V1 = V\_C1 + V\_C2$$

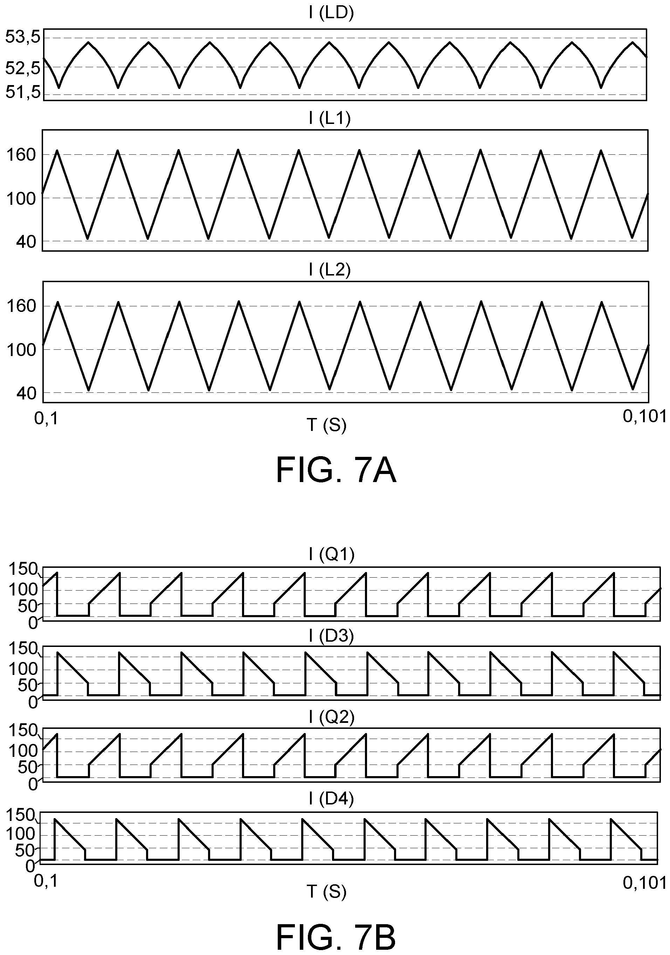

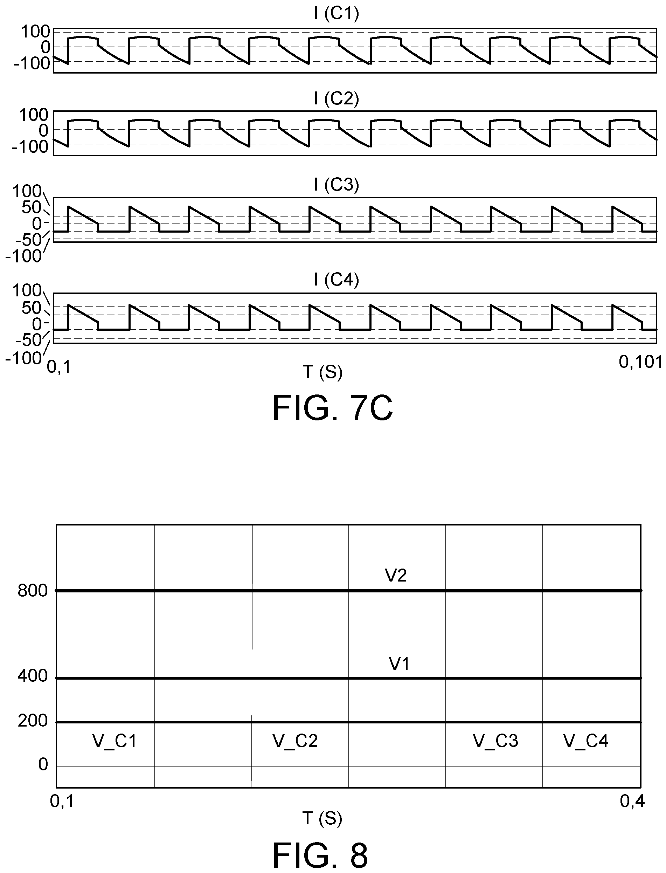

This enables, in the dual L-shaped circuit, the capacity of the capacitors to be reduced by half, with respect to the L-shaped converter. Furthermore, it should be advantageously noted that the average voltage value withstood by the diodes (D3-D4) and the transistors (Q1-Q2) is reduced by half, and the peak value of the withstood voltage is no longer the value of the output voltage V2, but is half of said output voltage V2. Figures 7A-7C show currents and Figure 8 shows voltages from a simulation of the dual L-shaped converter. Figure 7A shows the currents in the coils L1 and L2, as well as in the load LD. Figure 7B shows the currents in the diodes D3 and D4 as well as in the transistors Q1-Q2. Figure 7C shows the currents in the input capacitors C1 and C2 and also in the output capacitors C3 and C4.

It can be seen that the behaviour in the dual L-shaped converter (Figures 7A-7C) is the same as the L-shaped converter (Figures 4A-4B), wherein the capacitors in the dual L-shaped circuit have half the capacity than those in the L-shaped circuit capacitors.

Figure 8 shows the input voltage V1, the output voltage V2 and the voltages on the input capacitors V_C1, V_C2 and on the output capacitors V_C3, V_C4, with a value for the "Dboost" duty cycle of 0.5 (50%). Figure 8 shows that for an input voltage V1 of 400 volts, the output voltage V2 is 800 volts and the voltage at the input and output capacitors V_C1, V_C2, V_C3, V_C4 is 200 Volts. The same dual L-shaped converter with a "Dboost" duty cycle value of 0.25 (25%) and an input voltage V1 of 400V, would have an output voltage V2 of 533.3V and a voltage in the input capacitors (V_C1, V_C2) that is maintained at 200V and a voltage in the output capacitors of 66.67V. In other words, the voltages of the input capacitors in the dual L-shaped converter is half that of the L-shaped converter, regardless of the duty cycle.

The L-shaped and the dual L-shaped converters shown in Figures 1 and 6 respectively, are "boost" type converters. Next, "bidirectional" converters will be shown, i.e., they can behave as boost or as buck.

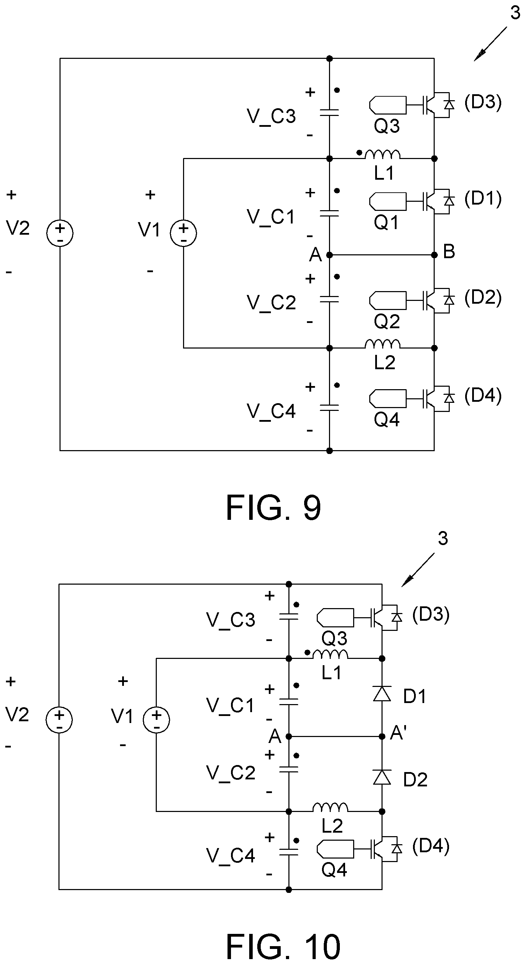

Figure 9 shows the bidirectional dual L-shaped converter. The bidirectional dual L-shaped DC/DC converter, according to the configuration shown in Figure 9, comprises: four capacitors C3-C1-C2-C4, wherein the four capacitors C3-C1-C2-C4 are configured to be connected to the output voltage V2 and the two central capacitors C1-C2 are configured to be connected to the input voltage V1; and, four transistors in series Q3-Q1-Q2-Q4, which are connected to the output voltage V2 and wherein the central transistors Q1-Q2 are connected to the input voltage V1 by means of respective two coils L1-L2, the interconnection point (A') between the central transistors Q1-Q2 being connected to the interconnection point (A) between the two central capacitors C1-C2.

Therefore, the configuration of the Bidirectional Dual L-shaped DC/DC converter is equivalent to the configuration of the Dual L-shaped DC/DC converter wherein the diodes D3-D4 are replaced by two transistors Q3-Q4.

In the topology of the Bidirectional Dual L-shaped DC/DC converter (Fig. 9) two modes of operation must be distinguished: Buck and Boost.

When it is required to obtain more voltage at the output V2 than at the input V1, the Bidirectional Dual L-shaped DC/DC converter will operate in Boost mode, behaving identically to the Dual L-shaped DC/DC Converter (Figures 6 to 8). To do this, the transistors Q3 and Q4 will always remain open (conducting through diode D3-D4), and the transistors Q1 and Q2 will be switched.

On the contrary, when it is required to obtain less voltage in V1 than in V2, the input (now V2) and the output (now V1) are interchanged, the bidirectional dual L-shaped DC/DC converter will work in Buck mode, working in the opposite direction to the previous one (Boost mode). To do this, the transistors Q1 and Q2 will always remain open (conducting through diode D1-D2), and the transistors Q3 and Q4 will be switched. In this way, the bidirectional dual L-shaped DC/DC converter operating in Buck mode would have a behaviour as shown in Figure 10. In this operating mode, V2 becomes the input voltage, and V1 the output voltage, being able to control the voltage of V1 from a maximum voltage equal to the voltage V2 to the minimum voltage required. Therefore, analysing the DC/DC circuit of Figure 10, it can be seen how the voltage withstood by the capacitors V_C3 and V_C4 will increase as V1 decreases, according to the following expression:

$$V2 = V\_C3 + V\_C4 + V1$$

The relationship between the voltage V2 and V1 according to the duty cycle (D_buck) in Buck mode will be:

$$V1/V2 = D\_buck$$

Substituting this equation in the preceding one and calculating, the relationship between the voltage and the input capacitors is obtained:

$$V\_C3/V2 = V\_C4/V2 = ((1-D\_buck))/2$$

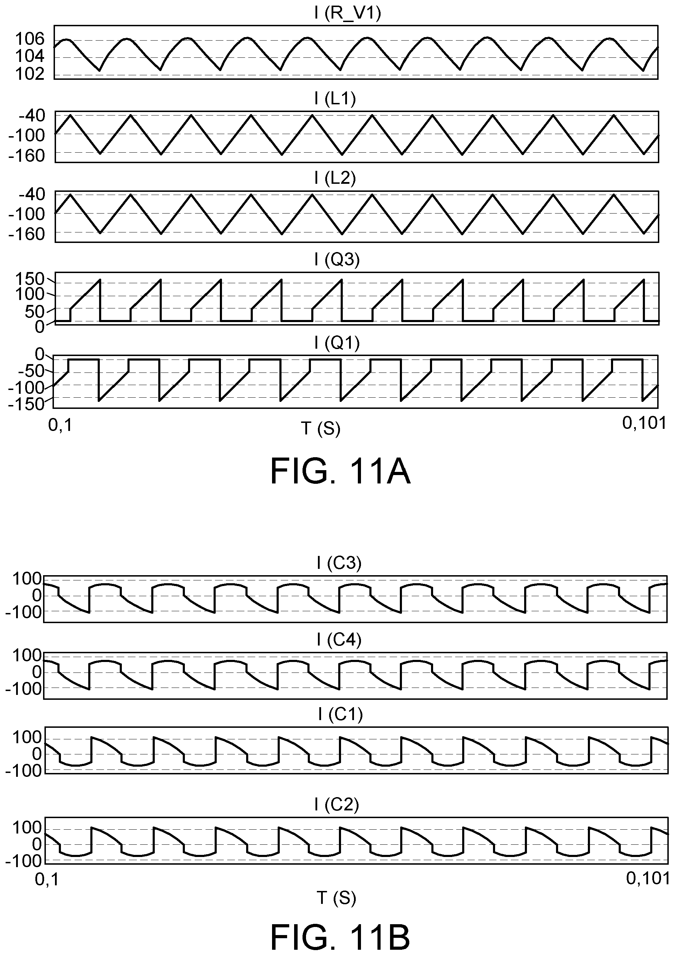

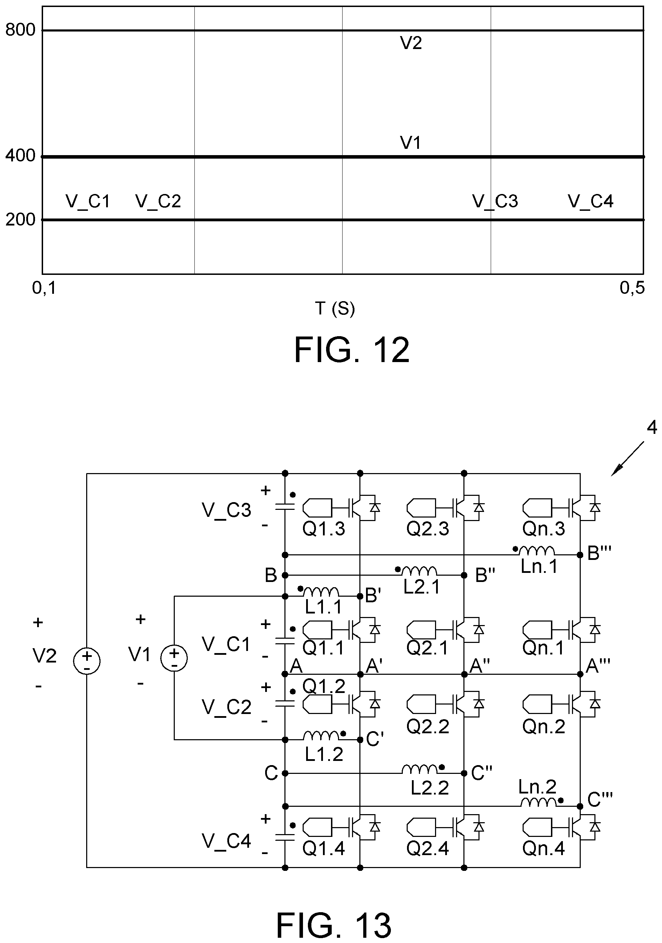

Figures 11A-11B and 12 show currents and voltages from a simulation of the Bidirectional Dual L-shaped DC/DC converter operating in Buck mode. Figure 11A shows the currents at the input "R_V1" (equivalent to placing a resistor R in V1 subjected to voltage V1), in the coils L1 and L2, and in the transistors Q3 and Q1. Figure 11B shows the currents in the capacitors C1, C2, C3, and C4. It can be seen that the behaviour is the same as the Dual L-shaped converter, but in Buck operating mode. The current in the coils in the Buck operating mode (Figure 11A) has the reverse direction to the currents in the Boost operating mode (Figure 7A).

Figure 12 shows the voltage V1 and the voltage V2 and the voltages across the capacitors V_C1, V_C2, V_C3, V_C4, with a value for the "Dboost" duty cycle of 0.5 (50%). Figure 12 shows that for an input voltage V2 of 800 volts, the output voltage V1 is 400 volts and the voltage at the input and output capacitors (V_C1, V_C2, V_C3, V_C4) is 200 Volts. The same bidirectional dual L-shaped converter in Buck mode with a "Dboost" duty cycle value of 0.75 (75%) and an input voltage V2 of 800V, would have an output voltage of V1 of 600V and a voltage at the input capacitors (V_C3, V_C4) of 100V and a voltage at the output capacitors (V_C1, V_C2) of 300V. Therefore, it can be said that the bidirectionality of the Bidirectional Dual L-shaped converter lies in the capacity to raise voltage in V2 from V1, and to lower voltage in V1 from V2.

Based on the Bidirectional Dual L-shaped DC/DC converter, Figure 13 shows the Interleaved Bidirectional Dual L-shaped DC/DC Converter with "n" levels or simply "Interleaved" (Fig.13 - 4). The Interleaved Bidirectional Dual L-shaped DC/DC Converter of "n" levels, according to the configuration shown in Figure 13, comprises: the four capacitors C3, C1, C2 and C4 connected in series, wherein the four capacitors (C3-C1-C2-C4) are configured to be connected to the voltage V2 and the two central capacitors (C1-C2) are configured to be connected to the voltage V1. Voltage V1 is the input voltage and V2 is the output voltage in Boost operating mode, and vice versa in Buck mode. The Interleaved Bidirectional Dual L-shaped DC/DC Converter of "n" levels additionally comprises "n" levels, wherein each level "i" is a natural number between "1" and "n" and wherein each level "i" is made up of four transistors in series (Qi3-Qi1-Qi2-Qi4), which are connected to the voltage V2 and wherein the central transistors (Qi1-Qi2) are connected to the voltage V1 by means of two coils (Li.1-Li.2), the interconnection point (B, B', B", B‴) between the central transistors (Qi1, Qi2) being connected to the interconnection point (A, A', A", A‴) between the two central capacitors (C1, C2).

The operation of the Interleaved Bidirectional Dual L-shaped DC/DC Converter is identical to the Bidirectional Dual L-shaped DC/DC Converter, with the advantage that the input and output current is distributed in an equivalent way by each one of the levels. In addition, there is a phase shift in the current according to the number of levels in an equivalent way:

$$\text{Phase shift} = (360°)/(\text{No levels})$$

The main added advantages of this topology is the reduction of the circulating current for each switched bridge and coil, in addition to the decrease of the ripple in the current and the voltage at the output. The more levels that are interleaved, the more the ripple will decrease.

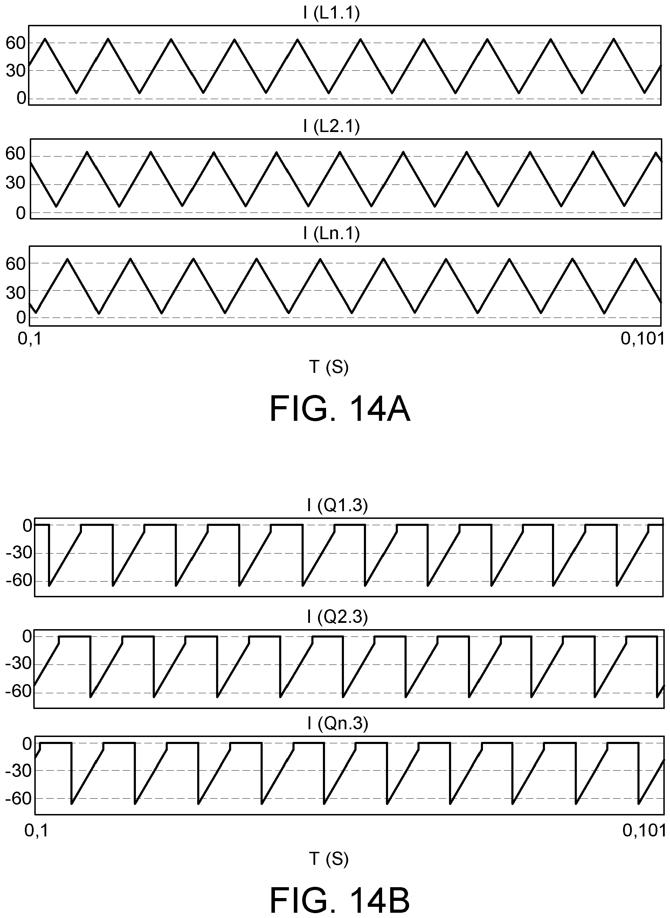

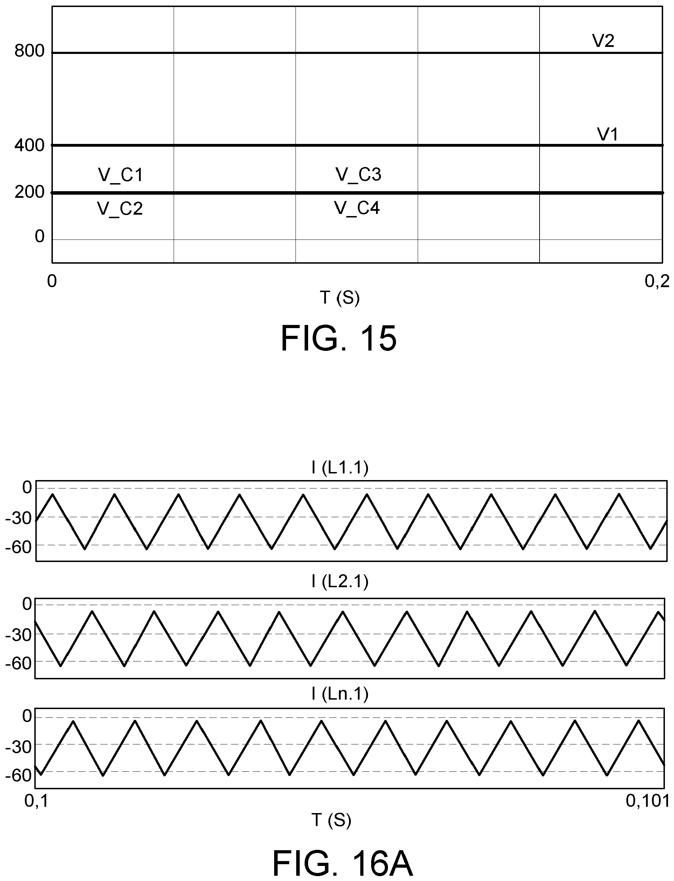

Figures 14A-14D (Boost) and 16A to 16D (Buck) show currents and Figure 15 shows voltages of a simulation of the 3-level Interleaved Bidirectional Dual L-shaped DC/DC Converter (n=3).

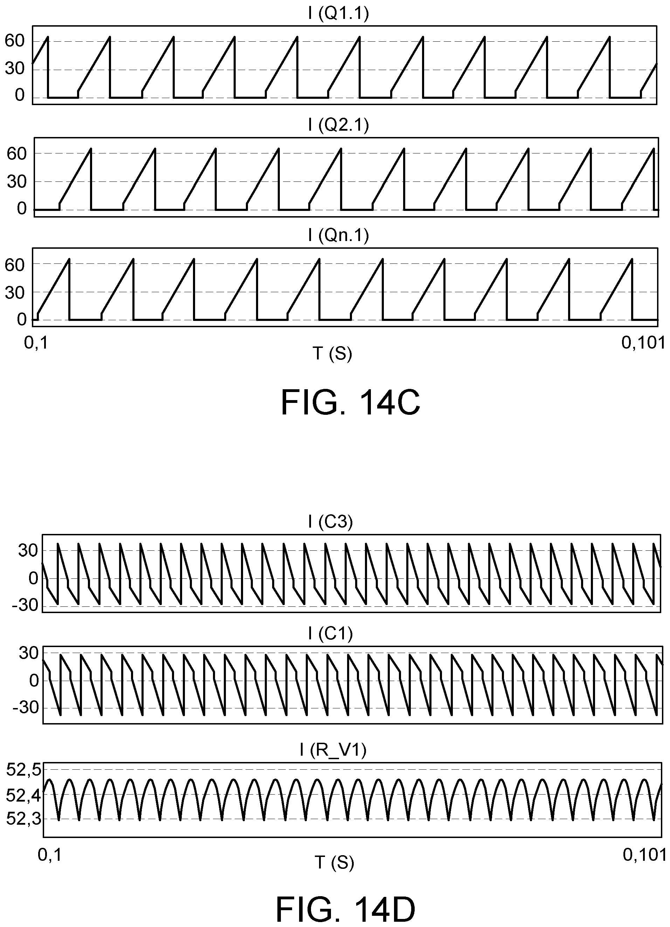

Figure 14A shows the currents in the coils L1.1, L2.1, and Ln.1. Figure 14B shows the currents in the transistors Q1.3, Q2.3, and Qn.3. Figure 14C shows the currents in the transistors Q1.1, Q2.1, and Qn.1. Figure 14D shows the currents in the output capacitor C3 and in the input capacitor C1 as well as the current in the load (a load resistor is placed in V2 that would be subjected to the voltage V2). It can be seen how the average value in the coils is 1/3 with respect to the Bidirectional Dual L-shaped DC/DC converter, in addition to the phase shift of the current. If the current ripple in the load is analysed, this is 0.22%; however, in the same non-interleaved converter it would be 1.95%.

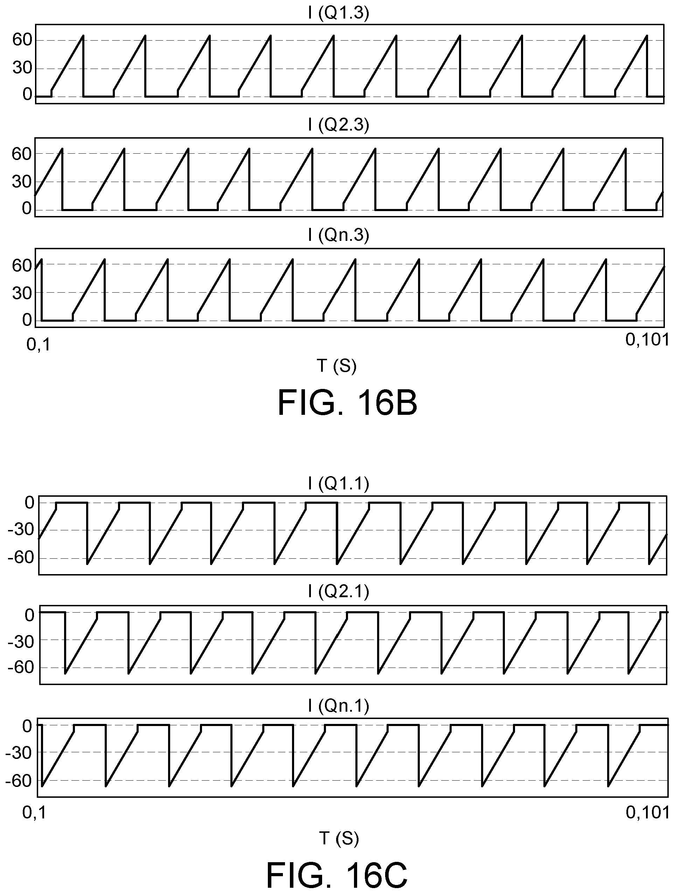

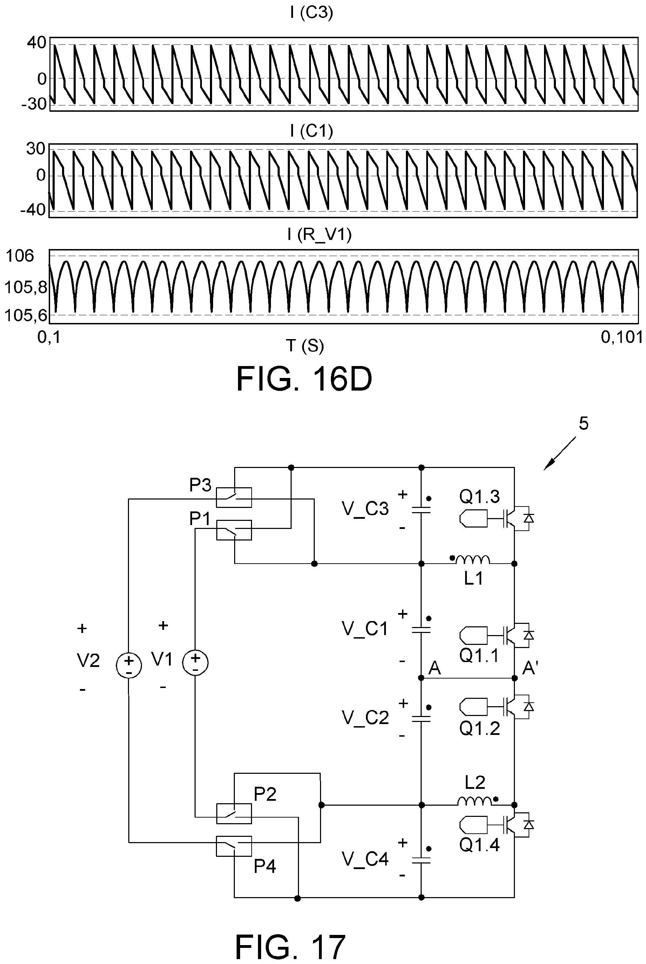

Figure 15 shows the voltage V1 and the voltage V2 and the voltages across the capacitors (V_C1, V_C2, V_C3, V_C4), with a value for the "Dboost" duty cycle of 0.5 (50%). Figure 15 shows that for an input voltage V1 of 400 volts, the output voltage V2 is 800 volts and the voltage at the input and output capacitors (V_C1, V_C2, V_C3, V_C4) is 200 Volts. Figure 16D shows how the currents in the capacitors behave the same as in the dual topologies, maintaining the advantage of these in addition to adding the advantage of interleaving:

- Current distribution between the coils and the transistors.
- Ripple decrease at the output.

The same 3-level Interleaved Bidirectional Dual L-shaped DC/DC Converter in Buck mode (Figures 16A-16D) has the reverse direction to the currents in Boost operating mode (Figures 14A-14D).

Finally, the Total Bidirectional Dual L-shaped DC/DC Converter is shown in Figure 17. The Total Bidirectional Dual L-shaped DC/DC Converter, according to the configuration shown in Figure 17, comprises: four capacitors in series (C3-C1-C2-C4), wherein the four capacitors (C3-C1-C2-C4) are configured to be connected to the voltage V2 by means of the switches P3-P4 or to voltage V1 by means of the switches P1-P2, and the two central capacitors (C1-C2) are configured to be connected to the same voltages (V1, V2) in a reversed way (V2-V1) by means of the switches P1, P2, P3 and P4; in this way if the four capacitors (C3-C1-C2-C4) in series are connected to V2, the two central capacitors (C1, C2) are connected to V1 and vice versa. Additionally, the Total Bidirectional Dual L-shaped DC/DC Converter comprises four transistors in series (Q3-Q1-Q2-Q4), which are connected to the same voltage as the four capacitors in series (C3-C1-C2-C4) and wherein the central transistors (Q1-Q2) are connected to the same voltage as the two central capacitors (C1, C2) by means of two respective coils (L1-L2), the interconnection point (A') between the central transistors (Q1-Q2) being connected to the interconnection point (A) between the two central capacitors.

Unlike the topology of the Bidirectional Dual L-shaped DC/DC Converter, wherein the bidirectionality lies in the capacity to raise the voltage in one direction and lower the voltage in the other direction, this topology of the Total Bidirectional Dual L-shaped DC/DC Converter enables total bidirectionality thanks to the capacity to change the input for the output, and always work in single operating mode. Being able to raise and lower the voltage in either of the two directions.

In addition, this topology can be extended to a Total Interleaved Bidirectional Dual L-shaped DC/DC converter, wherein the advantage of an interleaved converter would be obtained along with the total bidirectionality of the converter.

The graphs of currents and voltages would be the equivalent to the Buck or Boost operating mode of the Bidirectional Dual L-shaped DC/DC converter, and if they are interleaved, to the Total Interleaved Bidirectional Dual L-shaped DC/DC converter.

**Claims**

1. An L-shaped DC/DC converter (1), **characterised in that** it comprises:

   • a first coil (L1);
   • a first capacitor (C1) in series with a third capacitor (C3), wherein the first capacitor (C1) is configured to be connected to a first voltage (V1) and wherein the first capacitor (C1) in series with the third capacitor (C3) are configured to be connected to a second voltage (V2);
   • a first transistor (Q1) connected in series with a third transistor (Q3) and configured to be connected to the second voltage (V2); and,

   wherein an interconnection point (A') between the first transistor (Q1) and the third transistor (Q3), is connected with an interconnection point (A) between the first capacitor (C1) and the third capacitor (C3) with the first coil (L1) therebetween.

2. An L-shaped DC/DC converter, according to claim 1, wherein when the third transistor (Q3) operates as a diode (D3), the first voltage (V1) is an input voltage and the second voltage (V2) is an output voltage, wherein the second voltage (V2) is greater than the first voltage (V1).

3. An L-shaped DC/DC converter, according to claim 1, wherein it further comprises: a second capacitor (C2), a fourth capacitor (C4), a second transistor (Q2), a fourth transistor (Q4) and a second coil (L2); wherein:

   • the third capacitor (C3), the first capacitor (C1), the second capacitor (C2) and the fourth capacitor (C4) are connected in series (C3-C1-C2-C4) and are configured to be connected to the second voltage (V2) and the first capacitor (C1) in series with the second capacitor (C2) (C1-C2) are configured to be connected to the first voltage (V1); and,
   • the first transistor (Q1) and the second transistor (Q2) are connected in series and connect with the first voltage by means of the first coil (L1) and the second coil (L2), respectively, and with the second voltage (V2) by means of the third transistor (Q3) and the fourth transistor (Q4), respectively, the interconnection point (A') between the first transistor (Q1) and the second transistor (Q2) being connected to the interconnection point (A) between the first capacitor (C1) and the second capacitor (C2).

4. An L-shaped DC/DC converter, according to claim 3, wherein when the third transistor (Q3) and the fourth transistor (Q4) operate as diodes (D3, D4) in reverse polarisation, the first voltage (V1) is an input voltage and the second voltage (V2) is an output voltage, wherein the second voltage (V2) is greater than the first voltage (V1).

5. An L-shaped DC/DC converter, according to claim 3, wherein when the first transistor (Q1) and the second transistor (Q2) operate as diodes (D1, D2) in reverse polarisation, the first voltage (V1) is an output voltage and the second voltage (V2) is an input voltage, wherein the second voltage (V2) is greater than the first voltage (V1).

6. An L-shaped DC/DC converter, according to claim 3, wherein it comprises "n" levels wherein each level "i" is comprised between 1 and n, and wherein each "i" level comprises: an i-third transistor (Qi.3), an i-first transistor (Qi.1), an i-second transistor (Qi.2) and an i-fourth transistor (Qi.4) connected in series, and an i-first coil (Li.1) and an i-second coil (Li.2); wherein the i-first transistor (Qi.1) and the i-second transistor (Qi.2) are connected in series and connect with the first voltage (V1) by means of the i-first coil (Li.1) and the i-second coil (Li.2), respectively, and with the second voltage (V2) by means of the i-third transistor (Qi.3) and the i-fourth transistor (Qi.4), respectively, the interconnection point (B, C, D) between the i-first transistor (Qi.1) and the i-second transistor (Qi.2) being connected to the interconnection point (A) between the first capacitor (C1) and the second capacitor (C2).

7. An L-shaped DC/DC converter, according to claim 6, wherein when the third transistor (Q3), the fourth transistor (Q4), the i-third transistor (Qi.3), the i-fourth transistor (Qi.4) operate as diodes (D3, D4, Di.3, Di.4) in reverse polarisation, the first voltage (V1) is an input voltage and the second voltage (V2) is an output voltage, wherein the second voltage (V2) is greater than the first voltage (V1).

8. An L-shaped DC/DC converter, according to claim 6, wherein when the first transistor (Q1), the second transistor (Q2), the i-first transistor (Qi.1) and the i-second transistor (Qi.2) operate as diodes (D1, D2, Di.1, Di.2) in reverse polarisation, the first voltage (V1) is an output voltage and the second voltage (V2) is an input voltage, wherein the second voltage (V2) is greater than the first voltage (V1).

9. An L-shaped DC/DC converter, according to any one of the preceding claims, wherein it additionally comprises switches (P1, P2, P3, P4) to connect an input and an output of the circuit with the first voltage (V1) and with the second voltage (V2) indistinctly.

FIG. 1

FIG. 2

FIG. 3

FIG. 4A

FIG. 4B

FIG. 5

FIG. 6

I (LD)

I (L1)

I (L2)

FIG. 7A

I (Q1)

I (D3)

I (Q2)

I (D4)

FIG. 7B

I (C1)

I (C2)

I (C3)

I (C4)

FIG. 7C

FIG. 8

FIG. 9

FIG. 10

I (R_V1)

I (L1)

I (L2)

I (Q3)

I (Q1)

0,1                    T (S)                    0,101

# FIG. 11A

I (C3)

I (C4)

I (C1)

I (C2)

0,1                                             0,101

T (S)

# FIG. 11B

FIG. 12

FIG. 13

I (L1.1)

I (L2.1)

I (Ln.1)

0,1                                                                    0,101

T (S)

## FIG. 14A

I (Q1.3)

I (Q2.3)

I (Qn.3)

0,1                                                                    0,101

T (S)

## FIG. 14B

I (Q1.1)

I (Q2.1)

I (Qn.1)

0,1                                                                                    0,101

T (S)

## FIG. 14C

I (C3)

I (C1)

I (R_V1)

0,1                                                                                    0,101

T (S)

## FIG. 14D

FIG. 15

FIG. 16A

I (Q1.3)

I (Q2.3)

I (Qn.3)

0,1

0,101

T (S)

## FIG. 16B

I (Q1.1)

I (Q2.1)

I (Qn.1)

0,1

0,101

T (S)

## FIG. 16C

I (C3)

I (C1)

I (R_V1)

FIG. 16D

FIG. 17

**EP 3 902 131 A1**

# INTERNATIONAL SEARCH REPORT

| International application No. |
|---|
| PCT/ES2019/070790 |

**A. CLASSIFICATION OF SUBJECT MATTER**

*H02M3/158* (2006.01)
*H02M3/335* (2006.01)
According to International Patent Classification (IPC) or to both national classification and IPC

**B. FIELDS SEARCHED**

Minimum documentation searched (classification system followed by classification symbols)
H02M

Documentation searched other than minimum documentation to the extent that such documents are included in the fields searched

Electronic data base consulted during the international search (name of data base and, where practicable, search terms used)

EPODOC, INVENES, XPI3E, XPIEE, XPESP, INSPEC

**C. DOCUMENTS CONSIDERED TO BE RELEVANT**

| Category* | Citation of document, with indication, where appropriate, of the relevant passages | Relevant to claim No. |
|---|---|---|
| A | US 2002047693 A1 (DELTA ELECTRONICS INC) 25/04/2002, Figures (3a) (3b); paragraphs [0019]-[0030] | 1-9 |
| A | US 2016072387 A1 (FRONIUS INT GMBH) 10/03/2016, Paragraphs [0024]-[0028]; figure 1. | 1-9 |
| A | US 2015084611 A1 (CREE INC) 26/03/2015, Paragraphs [0030]-[0034]; figures 2 and 4. | 1-9 |
| A | US 2012319664 A1 (FUJII KANSUKE; FUJI ELECTRIC CO LTD) 20/12/2012, Paragraphs [0031]-[0032]; figure 3 | 1-9 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 15/01/2020 | **(16/01/2020)** |

| Name and mailing address of the ISA/ | Authorized officer |
|---|---|
| OFICINA ESPAÑOLA DE PATENTES Y MARCAS<br>Paseo de la Castellana, 75 - 28071 Madrid (España)<br>Facsimile No.: 91 349 53 04 | L. García Aparicio<br><br>Telephone No. 91 3493057 |

Form PCT/ISA/210 (second sheet) (January 2015)

## INTERNATIONAL SEARCH REPORT

Information on patent family members

International application No.

PCT/ES2019/070790

| Patent document cited in the search report | Publication date | Patent family member(s) | Publication date |
|---|---|---|---|
| US2002047693 A1 | 25.04.2002 | US6498463 B2<br>TW497326B B | 24.12.2002<br>01.08.2002 |
| US2016072387 A1 | 10.03.2016 | CN105450013 A<br>CN105450013B B<br>AT516214 A1<br>US9641079 B2<br>DE102015211061<br>A1<br>EP2996235 A1 | 30.03.2016<br>15.06.2018<br>15.03.2016<br>02.05.2017<br>10.03.2016<br>16.03.2016 |
| US2015084611 A1 | 26.03.2015 | CN105683854 A<br>CN105683854B B<br>EP3049880 A1<br>EP3049880 A4<br>WO2015048096 A1<br>US9564806 B2 | 15.06.2016<br>12.01.2018<br>03.08.2016<br>17.05.2017<br>02.04.2015<br>07.02.2017 |
| US2012319664 A1 | 20.12.2012 | JP2013005649 A<br>JP5800130B B2<br>CN102843028 A<br>CN102843028B B<br>US8547073 B2 | 07.01.2013<br>28.10.2015<br>26.12.2012<br>30.09.2015<br>01.10.2013 |

Form PCT/ISA/210 (patent family annex) (January 2015)